# EUROPÄISCHE PATENTSCHRIFT

(11) **EP 1 299 277 B1**
(45) Veröffentlichungstag und Bekanntmachung des Hinweises auf die Patenterteilung: **24.05.2006**
(21) Anmeldenummer: 01271812.8
(22) Anmeldetag: 26.10.2001
(51) Int. Cl.: B62B 5/04, F16G 13/00, F16C 1/00

(54) **VON HAND BEWEGBARER TRANSPORTWAGEN**
HAND PROPELLED TRANSPORT CART
CHARIOT DE TRANSPORT DEPLACABLE A LA MAIN

(30) Priorität: 15.05.2001 DE 10123647
(43) Veröffentlichungstag der Anmeldung: 09.04.2003
(73) Patentinhaber: WANZL METALLWARENFABRIK GMBH, 89336 Leipheim (DE)
(72) Erfinder: STÖCKLE, Dieter, 89361 Landensberg (DE); RIESENEGGER, Markus, 89398 Ettenbeuren (DE)
(86) Internationale Anmeldenummer: PCT/DE2001/004087
(87) Internationale Veröffentlichungsnummer: WO 2002/092409

(56) Entgegenhaltungen:
- DE-A- 3 336 678
- DE-U- 1 812 979
- GB-A- 495 894
- GB-A- 1 428 753
- GB-A- 2 293 095
- US-A- 1 428 163
- US-A- 3 358 524

## Beschreibung

Die Erfindung betrifft einen von Hand bewegbaren Transportwagen, mit einem mit Fahrrollen ausgestatteten Fahrgestell und mit einer von gekrümmten Holmen getragenen Schiebeeinrichtung, die über ein Gestänge funktional mit wenigstens einer der Fahrrollen zusammenwirkt, wobei das Gestänge von der Schiebeeinrichtung ausgehend innerhalb der Holme zu der wenigstens einen Fahrrolle geführt ist und wobei das Gestänge durch ein Zwischenstück gelenkig ausgebildet ist.

Das deutsche Gebrauchsmuster G 86 19 971.4 beschreibt einen derartigen Transportwagen. Das dabei verwendete Zwischenstück weist zwei Bohrungen auf, die zur gelenkigen Aufnahme der oberen und unteren Stange des Gestänges bestimmt sind. In montiertem Zustand des Gestänges befindet sich das Zwischenstück im Krümmungsbereich eines der beiden Holme. Dadurch ist es möglich, beispielsweise ein zur Bremsung einer hinteren Fahrrolle erforderliches Gestänge innerhalb eines gekrümmten Holmes des Transportwagens beweglich zu führen. Die Zeichnung des genannten Gebrauchsmusters zeigt einen Transportwagen, dessen die Schiebeeinrichtung tragenden Holme nur leicht gekrümmt sind.

Es ist Aufgabe der Erfindung, einen hier vorliegenden Transportwagen so weiterzuentwickeln, dass dieser auch bei stark gekrümmten Holmen ein in den Holmen zu führendes Gestänge aufzunehmen vermag.

Die Lösung der Aufgabe besteht darin, dass mindestens ein weiteres Zwischenstück vorgesehen ist und dass die Zwischenstücke in Folge angeordnet gelenkig miteinander verbunden sind.

Durch die Verwendung von wenigstens einem weiteren Zwischenstück lässt sich das Gestänge in vorteilhafter Weise auch in stark gekrümmten Holmen unterbringen. Bei der Verwendung von mehr als zwei Zwischenstücken ist es sogar möglich, ein Gestänge in einem Bereich mit zwei gegenläufigen Krümmungen unterzubringen, wobei letzteres vor allen Dingen dann auf einfache Weise möglich ist, wenn die Zwischenstücke je einen scheibenförmig gestalteten Anlageabschnitt aufweisen, die zum Anliegen an die Innenwand der Holme bestimmt sind. Dadurch können die Zwischenstücke mit den Holmen nicht verkanten. Die Zwischenstücke passen sich vielmehr den unterschiedlichen Krümmungen an, so dass in den Holmen untergebrachte Gestänge problemlos in beide Richtungen bewegbar sind.

Weitere von Hand bewegbare Transportwägen werden von der DE 3336678 A1 und der DE 1812979 U gezeigt.

Die Erfindung wird anhand von Ausführungsbeispielen näher erläutert. Es zeigt
- Fig. 1: einen Transportwagen in Seitenansicht;
- Fig. 2: ein Zwischenstück;
- Fig. 3: zwei gelenkig miteinander verbundene Zwischenstücke, sowie
- Fig. 4 und 5: weitere zweckmäßig gestaltete Zwischenstücke.

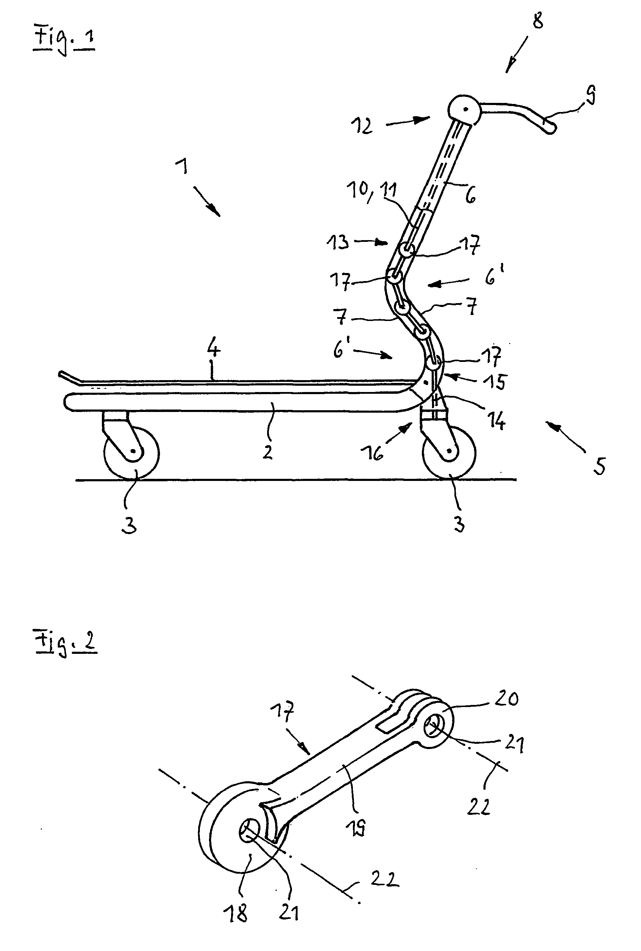

Fig. 1 zeigt einen von Hand bewegbaren Transportwagen 1, dessen Fahrgestell 2 vier Fahrrollen 3 aufweist und im Beispiel mit einer Ladeplattform 4 ausgestattet ist. Ausgehend vom hinteren Bereich 5 des Fahrgestelles 2 streben beidseitig zwei aus Rohren gefertigte Holme 6 nach oben und tragen eine Schiebeeinrichtung 8, die im Beispiel in bekannter Weise einen begrenzt verschwenkbaren Griff 9 besitzt. Die so gestaltete Schiebeeinrichtung 8 ist mit einem Gestänge 10 verbunden, das im Inneren von wenigstens einem der Holme 6 begrenzt schiebebeweglich geführt ist. Die Holme 6 sind zweifach gekrümmt, wobei im Beispiel die Krümmungen 6' gegenläufig ausgebildet sind. Das Gestänge 10 weist eine obere Stange 11 auf, die mit ihrem oberen Ende 12 mit der Schiebeeinrichtung 8 verbunden ist. Die obere Stange 11 ist mit ihrem unteren Ende 13 gelenkig mit einem Zwischenstück 17 verbunden, das Bestandteil einer Reihe von gleichen Zwischenstücken 17 ist, die in Folge angeordnet gelenkig miteinander verbunden sind. Mit dem letzten der Zwischenstücke 17 ist eine untere Stange 14 mit ihrem oberen Ende 15 gelenkig verbunden. Die untere Stange 14 ist aus dem Holm 6 herausgeführt und mit ihrem unteren Ende 16 mit einer der Fahrrollen 3 verbunden. Die Schiebeeinrichtung 8 wirkt über das Gestänge 10 funktional mit wenigstens einer der Fahrrollen 3 zusammen. Durch Verschwenken der Schiebeeinrichtung 8, beispielsweise des Griffes 9, wird das Gestänge 10 entlang seiner Längserstreckung bewegt, so dass beispielsweise eine Bremsung oder eine Lenkarretierung der entsprechenden Fahrrolle 3 bewirkt werden kann. Aus der Zeichnung ist deutlich erkennbar, dass die Zwischenstücke 17 ohne weiteres in der Lage sind, die gezeigten Krümmungen 6' schiebebeweglich zu überwinden, wobei im Beispiel die obere Stange 11 in einem geraden Abschnitt des Holmes 6 geführt ist.

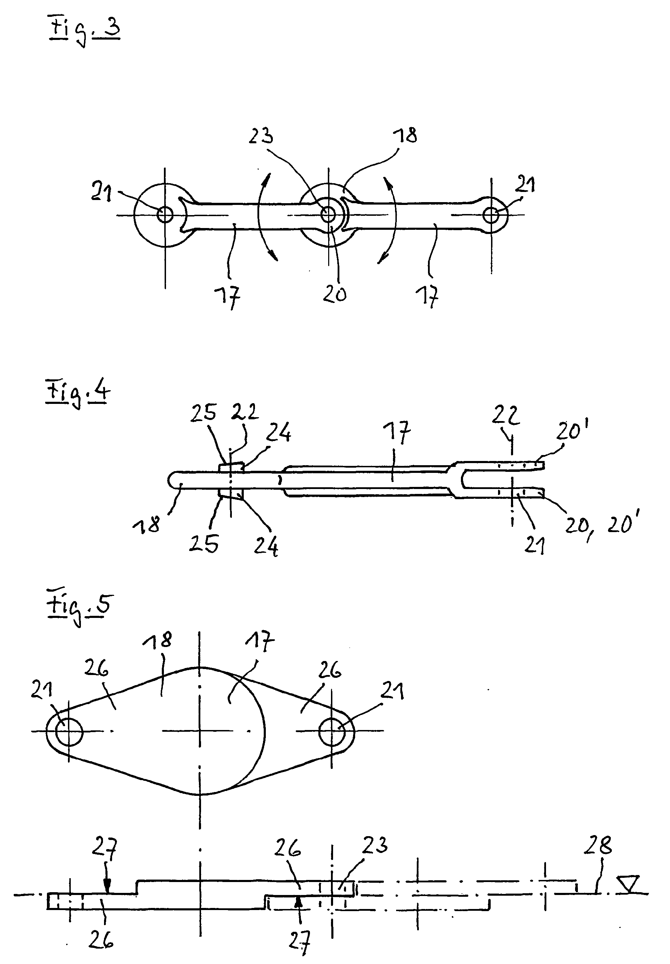

Fig. 2 zeigt ein Zwischenstück 17 in räumlicher Darstellung. Jedes Zwischenstück 17 ist als längliches Gebilde gestaltet, das einen kreisbogenabschnittförmigen Anlageabschnitt 18 aufweist, der zum Abstützen des Zwischenstückes 17 an der Innenwand 7 eines Holmes 6 bestimmt ist. An den Anlageabschnitt 18 schließt ein Steg 19 an, dessen Dicke oder Breite kleiner ist als der Durchmesser des Anlageabschnittes 18. Das dem Anlageabschnitt 18 gegenüberliegende Ende des Steges 19 ist gabelförmig ausgebildet wobei die Schenkel des so gebildeten Gabelabschnittes 20 augenförmig gestaltet sind. Sowohl der Anlageabschnitt 18 als auch der Gabelabschnitt 20 weisen einen zylindrischen Durchbruch 21 zur Aufnahme eines Achsbolzens 23 auf, vgl. Fig. 3, wobei die Durchbrüche 21 auf parallelen Achsen 22 angeordnet sind.

Wie in Fig. 3 gezeigt, lassen sich die Zwischenstücke 17 mit geeigneten Achsbolzen 23 gelenkig verbinden. An die jeweils letzten Zwischenstücke 17 einer Folge von Zwischenstücken 17 lassen sich ferner mit Hilfe der gleichen Achsbolzen 23 auch die obere und die untere Stange 11, 14 des Gestänges 10 anlenken. Der Gabelabschnitt 20 des links dargestellten Zwischenstückes 17 umfasst den Anlageabschnitt 18 des rechts dargestellten Zwischenstückes 17 teilweise. Der Achsbolzen 23 durchdringt den Gabelabschnitt 20 und den Anlageabschnitt 18 und ist auf geeignete Weise gegen Lösen gesichert. In der Zeichnung sind zwei Doppelpfeile eingezeichnet, welche die gelenkige Beweglichkeit zweier Zwischenstücke 17 darstellen sollen.

Es ist möglich, auf die eben erwähnten separaten Achsbolzen 23 dann zu verzichten, wenn, wie in Fig. 4 gezeigt, am Anlageabschnitt 18 anstelle eines zylindrischen Durchbruches 21 je ein nach außen ragender, auf der Achse 22 gelegener, zylindrischer Achszapfen 24 vorgesehen ist. Die Achszapfen 24 sind stirnseitig mit je einer Anschrägung 25 ausgestattet, so dass es möglich ist, bei aus Kunststoff gefertigten Zwischenstücken 17 die Achszapfen 24 eines ersten Zwischenstückes 17 in die am Gabelabschnitt 20 befindlichen Durchbrüche 21 eines zweiten Zwischenstückes 17 schnappschlüssig einrasten zu lassen. Dabei wird der Anlageabschnitt 18 des ersten Zwischenstückes 17 so weit zwischen die Gabelschenkel 20' des Gabelabschnittes 20 eines zweiten Zwischenstückes 17 eingefügt, bis die beiden Achszapfen 24 von den Durchbrüchen 21 aufgenommen worden sind. Es lassen sich somit auf einfache Weise zwei oder mehr Zwischenstücke 17 in Folge angeordnet gelenkig miteinander verbinden.

Bei dem in Fig. 5 in zwei Ansichten dargestellten Zwischenstück 17 ist der scheibenförmig oder kreisbogenabschnittförmig gestaltete Anlageabschnitt 18 mittig zwischen zwei Gelenkarmen 26 angeordnet. Die Gelenkarme 26 besitzen je eine auf einer gemeinsamen Ebene 28 gelegene Anlagefläche 27, die einmal von links und einmal von rechts in die Ebene 28 eingebunden sind, so dass durch den entstandenen Versatz der Gelenkarme 26 zwei und mehr Zwischenstücke 17 in Folge angeordnet gelenkig miteinander verbindbar sind, siehe strichpunktierte Darstellung. Die gelenkige Verbindung kann wiederum mit Hilfe von separaten Achsbolzen 23 oder aber mit Hilfe eines angeformten Achszapfens 24 erfolgen, der an einem der beiden Gelenkarme 26 auf einer Achse 22 angeordnet zum rastschlüssigen Eingreifen in einen zylindrischen Durchbruch 21 eines weiteren Zwischenstückes 17 bestimmt ist, vgl. auch Fig. 4. In diesem Falle befindet sich bei den Zwischenstücken 17 der Achszapfen 24 am ersten Gelenkarm 26 und der Durchbruch 21 am zweiten Gelenkarm 26.

## Patentansprüche

1. Von Hand bewegbarer Transportwagen (1) mit einem mit Fahrrollen (3) ausgestatteten Fahrgestell (2) und mit einer von gekrümmten Holmen (6) getragenen Schiebeeinrichtung (8), die über ein Gestänge (10) funktional mit wenigstens einer der Fahrrollen (3) zusammenwirkt, wobei das Gestänge (10) von der Schiebeeinrichtung (8) ausgehend innerhalb der Holme (8) zu der wenigstens einen Fahrrolle (3) geführt ist und wobei das Gestänge (19) durch ein Zwischenstück (17) gelenkig ausgebildet ist, **dadurch gekennzeichnet, dass** mindestens ein weiteres Zwischenstück (17) vorgesehen ist und dass die Zwischenstücke (17) in Folge angeordnet gelenkig miteinander verbunden sind.

2. Transportwagen nach Anspruch 1, **dadurch gekennzeichnet, dass** jedes Zwischenstück (17) einen Anlageabschnitt (18) zum Abstützen an der Innenwand (7) der Holme (6) aufweist und mit einem Gabelabschnitt (20) ausgestattet ist, der zum gelenkigen Verbinden des Zwischenstückes (17) mit dem Anlageabschnitt (18) eines weiteren Zwischenstückes (17) bestimmt ist.

3. Transportwagen nach Anspruch 2, **dadurch gekennzeichnet, dass** der Anlageabschnitt (18) eines jeden Zwischenstückes (17) kreisbogenabschnittförmig gestaltet ist.

4. Transportwagen nach einem der Ansprüche 2 oder 3, **dadurch gekennzeichnet, dass** der Gabelabschnitt (20) zum teilweisen Umfassen des Anlageabschnittes (18) eines weiteren Zwischenstückes (17) bestimmt ist.

5. Transportwagen nach einem der Ansprüche 2 bis 4, **dadurch gekennzeichnet, dass** der Anlageabschnitt (18) und der Gabelabschnitt (20) eines jeden Zwischenstückes (17) durch einen Steg (19) getrennt sind.

6. Transportwagen nach einem der Ansprüche 1 bis 5, **dadurch gekennzeichnet, dass** die gelenkige Verbindung zweier Zwischenstücke (17) über einen Achsbolzen (23) erfolgt.

7. Transportwagen nach einem der Ansprüche 1 bis 5, **dadurch gekennzeichnet, dass** jedes Zwischenstück (17) einen Anlageabschnitt (18) zum Abstützen an der Innenwand (7) der Holme (6) aufweist und dass an jedem Zwischenstück (17) wenigstens ein Achszapfen (24) angeordnet ist, der zum gelenkigen Einfügen in den mindestens einen Durchbruch (21) eines weiteren Zwischenstückes (17) bestimmt ist.

8. Transportwagen nach einem der Ansprüche 1 bis 5 und 7, **dadurch gekennzeichnet, dass** die Zwischenstücke (17) rastschlüssig miteinander verbunden sind.

9. Transportwagen nach Anspruch 1, **dadurch gekennzeichnet, dass** der Anlageabschnitt (18) mittig zwischen zwei Gelenkarmen (26) angeordnet ist.

10. Transportwagen nach Anspruch 9, **dadurch gekennzeichnet, dass** jeder Gelenkarm (26) eine Anlagefläche (27) aufweist, die sich auf einer gemeinsamen Ebene (28) befinden, wobei die Anlageflächen (27) einmal von links und einmal von rechts in die Ebene (28) eingebunden sind.

## Claims

1. A manually movable trolley (1) comprising a wheel frame (2) provided with casters (3), and a pushing arrangement (8) carried by curved longitudinal members (6) and functionally co-operating with at least one of the casters (3) via linkage (10), wherein the linkage (10), starting from the pushing arrangement (8), is guided inside the longitudinal members (6) to the at least one caster (3), and wherein the linkage (19 sic) is articulated by means of an intermediate piece (17), **characterised in that** at least one further intermediate piece (17) is provided and **in that** the intermediate pieces (17) are arranged in succession and connected to one another in an articulated manner.

2. A trolley according to claim 1, **characterised in that** each intermediate piece (17) has a supporting portion (18) for resting against the inner wall (7) of the longitudinal members (6) and is provided with a forked portion (20) intended to connect the intermediate piece (17) to the supporting portion (18) of a further intermediate piece (17) in an articulated manner.

3. A trolley according to claim 2, **characterised in that** the supporting portion (18) of each intermediate piece (17) is in the form of a portion of an arc of a circle.

4. A trolley according to either one of claims 2 or 3, **characterised in that** the forked portion (20) is intended to partially embrace the supporting portion (18) of a further intermediate piece (17).

5. A trolley according to any one of claims 2 to 4, **characterised in that** the supporting portion (18) and the forked portion (20) of each intermediate piece (17) are separated by a crosspiece (19).

6. A trolley according to any one of claims 1 to 5, **characterised in that** the articulated connection of two intermediate pieces (17) takes place by a pivot pin (23).

7. A trolley according to any one of claims 1 to 5, **characterised in that** each intermediate piece (17) has a supporting portion (18) for resting against the inner wall (7) of the longitudinal members (6), and **in that** at least one pivot pin (24) is arranged on each intermediate piece (17) and is intended for articulated insertion into the at least one opening (21) in a further intermediate piece (17).

8. A trolley according to any one claims 1 to 5 and 7, **characterised in that** the intermediate pieces (17) are connected to one another in a locked manner.

9. A trolley according to claim 1, **characterised in that** the supporting portion (18) is arranged centrally between two articulated arms (26).

10. A trolley according to claim 9, **characterised in that** each articulated arm (26) has a contact surface (27) arranged in a common plane (28), the contact surfaces (27) extending into the plane (28) from the left and from the right by turns.

## Revendications

1. Chariot de transport (1) déplaçable à la main comprenant un châssis de roulement (2) équipé de roulettes de roulement (3) et un dispositif de poussée (8) porté par des longerons courbés (6), lequel coopère de manière fonctionnelle avec au moins une des roulettes de roulement (3) par l'intermédiaire d'une tringle (10), la tringle (10) étant guidée à l'intérieur des longerons (6) depuis le dispositif de poussée (8) vers la au moins une roulette de roulement (3) ; et la tringle (19) étant réalisée à articulation au moyen d'une pièce intermédiaire (17),
**caractérisé en ce qu'**au moins une autre pièce intermédiaire (17) est prévue et **en ce que** les pièces intermédiaires (17) agencées successivement sont reliées entre elles de manière articulée.

2. Chariot de transport selon la revendication 1, **caractérisé en ce que** chaque pièce intermédiaire (17) présente un tronçon de contact (18) pour l'appui sur la paroi intérieure (7) des longerons (6) et est équipée d'un tronçon en fourche (20) qui est destiné à la liaison articulée de la pièce intermédiaire (17) avec le tronçon de contact (18) d'une autre pièce intermédiaire (17).

3. Chariot de transport selon la revendication 2, **caractérisé en ce que** le tronçon de contact (18) de chaque pièce intermédiaire (17) est réalisé en forme de tronçon d'arc de cercle.

4. Chariot de transport selon l'une des revendications 2 ou 3, **caractérisé en ce que** le tronçon en fourche (20) est destiné à entourer partiellement le tronçon de contact (18) d'une autre pièce intermédiaire (17).

5. Chariot de transport selon l'une des revendications 2 à 4, **caractérisé en ce que** le tronçon de contact (18) et le tronçon en fourche (20) de chaque pièce intermédiaire (17) sont séparés par une barrette (19).

6. Chariot de transport selon l'une des revendications 1 à 5, **caractérisé en ce que** la liaison articulée de deux pièces intermédiaires (17) est réalisée par l'intermédiaire d'un axe (23).

7. Chariot de transport selon l'une des revendications 1 à 5, **caractérisé en ce que** chaque pièce intermédiaire (17) présente un tronçon de contact (18) pour l'appui sur la paroi intérieure (7) des longerons (6) et **en ce qu'**au moins un tourillon (24) est agencé sur chaque pièce intermédiaire (17), lequel est destiné à l'insertion articulée dans le au moins un passage (21) d'une autre pièce intermédiaire (17).

8. Chariot de transport selon l'une des revendications 1 à 5 et 7, **caractérisé en ce que** les pièces intermédiaires (17) sont reliées l'une à l'autre par enclenchement.

9. Chariot de transport selon la revendication 1, **caractérisé en ce que** le tronçon de contact (18) est agencé au milieu entre deux bras articulés (26).

10. Chariot de transport selon la revendication 9, **caractérisé en ce que** chaque bras articulé (26) présente une surface de contact (27), se trouvant sur un plan commun (28), les surfaces de contact (27) étant encastrées dans le plan (28) une fois par la gauche et une fois par la droite.
